# EUROPEAN PATENT APPLICATION

(11) **EP 4 844 436 A1**
(43) Date of publication of application: **25.11.2026**
(21) Application number: 25178239.7
(22) Date of filing: 22.05.2025
(51) Int. Cl.: G01S 7/35, G01S 13/34, G01S 13/931

(54) **RADAR SYSTEM AND METHOD OF OPERATING RADAR SYSTEMS**

(71) Applicant: Xavveo GmbH, 13355 Berlin (DE)
(72) Inventor: ENGELS, Florian, 88239 Wangen im Allgäu (DE)
(74) Representative: Fischer, Uwe

(57) **Abstract**

The present invention inter alia relates to a radar system (10) comprising at least one transmit antenna (TAm) for emitting radar radiation (ERRm), at least one receive antenna (RAn) for receiving incoming radar radiation (IRRn), a mixing unit (12) and an evaluation unit (13), wherein the mixing unit (12) is configured to mix a receive signal provided by the receive antenna (RAn) with a reference signal and generate a baseband signal (BSn), wherein the evaluation unit (13) is configured to evaluate the baseband signal (BSn) and extract radar information (In) from the baseband signal (BSn), wherein the evaluation of the baseband signal (BSn) includes a mathematical approximation of the wavefront's shape of the incoming radar radiation (IRRn), and wherein the mathematical approximation is based on the assumption of a parabolic shape of the wavefront.

## Description

The present invention relates to radar systems and methods of operating radar systems.

### Background of the invention

German Patent DE 10 2022 201 312 B4 discloses a radar system that comprises transmit antennas for emitting radar radiation, receive antennas for receiving incoming radar radiation, and an evaluation unit.

Prior art radar systems obtain object positions via three-dimensional spectral analysis of the receive signal. Here the object distances are encoded in the frequencies along the temporal dimension of the receive signal and the object angles (azimuth and elevation) in the spatial frequencies along the transmit and receive antennas. The required frequency spectra are usually calculated using the fast Fourier transform (FFT) algorithm to decrease the calculation effort and increase the speed of the calculation. The FFT algorithm implicitly approximates the actual spherical wavefront of the incoming radar radiation by a planar wavefront. This approximation is justified if the object distances are large with respect to the maximal distances between receive antennas or transmit antennas. If this condition is not met, the spectra obtained with the FFT are deteriorated and the object distances and angles can no longer be determined accurately.

Nowadays, vehicles are typically equipped with radar systems for a variety of purposes. In particular the high demands of autonomous driving calls for high angular resolution and accuracy in future radar systems. To realize this, antenna arrays with antenna-to-antenna distances in the meter range and a high antenna count are needed. This has a practical consequence: The planar-wavefront assumption is no longer valid, as the antenna distances are on the same order of magnitude as the object distances.

### Objective of the present invention

An objective of the present invention is to provide a radar system that allows relatively large spacings between the receive antennas - in comparison to the distance of objects that are intended to be accurately detected.

A further objective of the present invention is to provide a method of operating a radar system, wherein the method considers relatively large spacings between the receive antennas - in comparison to the distance of objects that are intended to be accurately detected.

### Brief summary of the invention

An exemplary embodiment of the present invention relates to a radar system comprising at least one transmit antenna for emitting radar radiation, at least one receive antenna for receiving incoming radar radiation, a mixing unit and an evaluation unit. The mixing unit is configured to mix a receive signal provided by the receive antenna with a reference signal and generate a baseband signal. The evaluation unit is configured to evaluate the baseband signal and extract radar information from the baseband signal. The evaluation of the baseband signal includes a mathematical approximation of the wavefront's shape of the incoming radar radiation, wherein the mathematical approximation is based on the assumption of a parabolic shape of the wavefront.

An advantage of this embodiment is that - in contrast to prior art systems - relatively large spacings between the receive antennas - in comparison to the distance of objects that are sought to be detected - are possible without significantly deteriorating the accuracy of the detection. This technical result is achieved by employing a mathematical approximation based on the assumption of a parabolic wavefront.

The evaluation of the baseband signal preferably includes the steps of calculating a planar shape for the wavefront and bending the planar shape into the parabolic shape.

The step of bending the planar shape of the wavefront into the parabolic shape is preferably FFT-compatible.

The evaluation unit is preferably configured to apply the FFT-calculation after the step of bending the planar shape of the wavefront into the parabolic shape.

The mathematical approximation may include multiplying a planar function that describes a planar shape of the wavefront, and a correction function. The correction function is preferably adapted to bend the planar shape into the parabolic shape.

In the following, the following symbols are used for the formulas and explanations provided below:
- f: designates a carrier frequency of the driver signal,
- α: designates the slope of the carrier frequency,
- τ: designates the time delay between emission of the radar radiation by the transmit antenna and reception of the incoming radar radiation by the receive antenna,
- t: designates the time of measurement,
- qm: designates a position vector defining the position of the m-th transmit antenna with respect to a given coordinate system,
- pn: designates a position vector defining the position of the n-th receive antenna with respect to the given coordinate system,
- r: designates the distance of a detected object from the origin of the given coordinate system,
- Ts: designates a sampling rate of the evaluation unit,
- l: designates a sampling index,
- d: designates a direction vector, and/or
- c: designates the speed of light.

A driver signal that a driver unit provides to the transmit antenna, is preferably a linearly frequency-modulated signal.

For instance, in the case of a linearly frequency-modulated driver signal, the baseband signal may be considered equal to, or at least proportional to, a mathematical function X being defined as $X \left(t\right) = {e}^{j 2 π \left(fτ+ατt-\frac{α}{2}{τ}^{2}\right)}$

The mathematical approximation preferably includes replacing the mathematical function X with a product of a planar function and a correction function, for instance as follows: $X \left(t\right) = {e}^{j 2 π \left(fτ+ατt-\frac{α}{2}{τ}^{2}\right)} \approx TP \left(t\right) ∗ TC \left(t\right)$ wherein TP designates the planar function, and TC designates the correction function.

The planar function TP is preferably calculated for a given sampling index l as follows: $TP \left(l\right) = {e}^{- j 2 π \frac{f}{c} {d}^{T} \left({q}_{m}+{p}_{n}\right)} {e}^{j 4 π \frac{α}{c} {rT}_{s} l}$

The correction function TC may be calculated for the given sampling index l as follows $TC \left(l\right) = TC 1 \left(l\right) ∗ TC 2 \left(l\right)$ where TC1 describes a parabolic correction and TC2 describes a linear correction.

The parabolic correction is preferably calculated as follows $TC 1 \left(l\right) = {e}^{- jπ \frac{f}{rc} \left({\left|{q}_{m}\right|}^{2}+{\left|{p}_{n}\right|}^{2}\right)}$

The linear correction is preferably calculated as follows $TC 2 \left(l\right) = {e}^{j 4 π \frac{α}{c} {d}^{T} \left({q}_{m}+{p}_{n}\right) {T}_{s} l}$

The mixing unit preferably includes a mixer and a filter. The mixer may be configured to mix the receive signal with the reference signal and generate a mixed signal. The filter may be configured to filter the mixed signal and generate the baseband signal.

Another exemplary embodiment of the present invention relates to a vehicle comprising a radar system. The radar system is preferably a radar system as described above.

Another exemplary embodiment of the present invention relates to a method of operating a radar system, for instance a radar system as described above, including the steps of:
- emitting radar radiation,
- receiving incoming radar radiation and generating a receive signal,
- mixing the receive signal with a reference signal and generating a baseband signal, and
- evaluating the baseband signal, thereby extracting radar information from the baseband signal,
- wherein the step of evaluating the baseband signal includes a mathematical approximation of the wavefront's shape of the incoming radiation, and
- wherein the mathematical approximation of the wavefront's shape includes the assumption of a parabolic shape of the wavefront.

Another exemplary embodiment of the present invention relates to a computer program comprising instructions which, when executed by a computer, cause the computer to carry out the steps of
- evaluating a baseband signal generated by a radar system, for instance a radar system as described above, and/or generated within a method of operating a radar system, for instance the method described above, thereby extracting radar information from the baseband signal,
- wherein the step of evaluating the baseband signal includes a mathematical approximation of the wavefront's shape of the incoming radiation, and
- wherein the mathematical approximation of the wavefront's shape includes the assumption of a parabolic shape of the wavefront.

### Brief description of the drawings

In order that the manner, in which the above-recited and other advantages of the invention are obtained, will be readily understood, a more particular description of the invention briefly described above will be rendered by reference to specific embodiments thereof, which are illustrated in the appended figures. Understanding that these figures depict only typical embodiments of the invention and are therefore not to be considered limiting of its scope, the invention will be described and explained with additional specificity and detail by the use of the accompanying drawings in which
- Fig. 1: depicts an exemplary embodiment of a radar system according to the present invention,
- Fig. 2: depicts a driver signal suitable for the radar system of Figure 1,
- Fig. 3-5: depict a spherical wavefront, a planar wavefront and a parabolic wavefront,
- Fig. 6: depicts an exemplary embodiment of a vehicle according to the present invention, and
- Fig. 7: depicts an exemplary embodiment of a computer program comprising instructions which, when executed by a computer, cause the computer to carry out steps that include a parabolic approximation of the wavefront's shape of incoming radar radiation.

### Detailed description of the preferred embodiments

The preferred embodiments of the present invention will be best understood by reference to the drawings, wherein identical or comparable parts are designated by the same reference signs throughout.

It will be readily understood that the parameters of the embodiments of the present invention, as generally described herein, could vary in a wide range. Thus, the following more detailed description of exemplary embodiments of the present invention, is not intended to limit the scope of the invention but is merely representative of presently preferred embodiments of the invention.

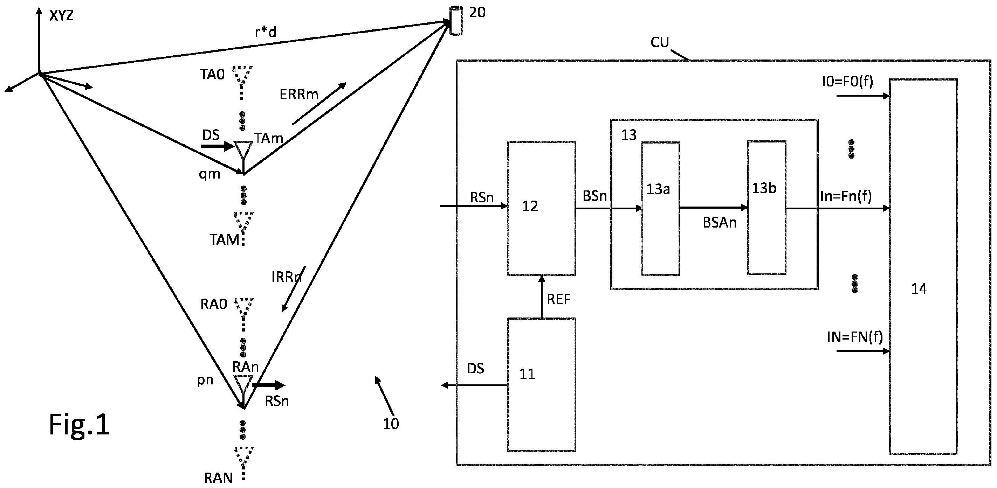

Figure 1 shows an exemplary embodiment of a radar system 10 according to the present invention. The radar system 10 is preferably a FMCW- (Frequency Modulated Continuous Wave) radar system. The radar system 10 of Figure 1 comprises a plurality M of transmit antennas TA0,-,TAM-1, a plurality N of receive antennas RA0,..,RAN-1, and a central unit CU.

A vector qm designates the position of the m-th (m=0,...,M-1) transmit antenna TAm with respect to a given coordinate system XYZ. A vector pn designates the position of the n-th receive antenna RAn (n=0,...,N-1) with respect to the same coordinate system XYZ.

A vector r·d designates the position of a detected object 20 with respect to the coordinate system XYZ, where r is a scalar representing the length of the vector, and d (|d| = 1) is a unit vector indicating the direction of the object 20.

The following explanations refer to the m-th transmit antenna TAm and the n-th receive antenna RAn but apply analogously to the other transmit and receive antennas.

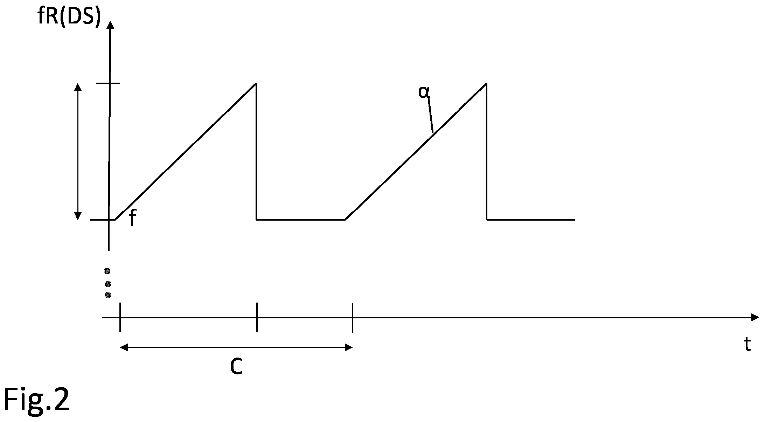

A driver unit 11 provides the m-th transmit antenna TAm with a driver signal DS. The driver signal DS may be a periodic frequency ramp signal. An exemplary embodiment of the driver signal DS is shown in Figure 2. The frequency fR of the driver signal DS may continuously increase or decrease over time t at least during an active segment of each periodic cycle C. f designates the carrier frequency (e.g. start frequency of each ramp) of the driver signal DS, and α designates the slope of the frequency's ramp.

The n-th receive antenna RAn receives incoming radar radiation IRRn and provides a receive signal RSn. The central unit CU evaluates the frequency shift between the emitted radar radiation ERRm and the incoming radar radiation IRRn in order to determine distances and/or speed of detected objects.

To this end, the central unit CU comprises a mixing unit 12 that is connected to the n-th receive antenna RAn. The mixing unit 12 mixes the receive signal RSn with a reference signal REF and generates a baseband signal BSn. The reference signal REF may be the driver signal DS or a signal that is correlated to the driver signal DS. Preferably, the reference signal REF is a time-delayed version of the driver signal DS.

In order to limit the spectrum of the baseband signal BSn and to facilitate the following mathematical processing of the baseband signal BSn the mixing unit 12 may include a mixer and a filter. The mixer mixes the receive signal RSn with the reference signal REF and generates a mixed signal. Then the filter filters the mixed signal to reduce the bandwidth and generates the baseband signal BSn. The filter may be a lowpass or bandpass filter.

An evaluation unit 13 that is connected to the mixing unit 12, evaluates the baseband signal BSn and extracts radar information In from it. The radar information In may be output in the form of a frequency spectrum Fn(f) which includes information about detected objects in the form of frequency peaks.

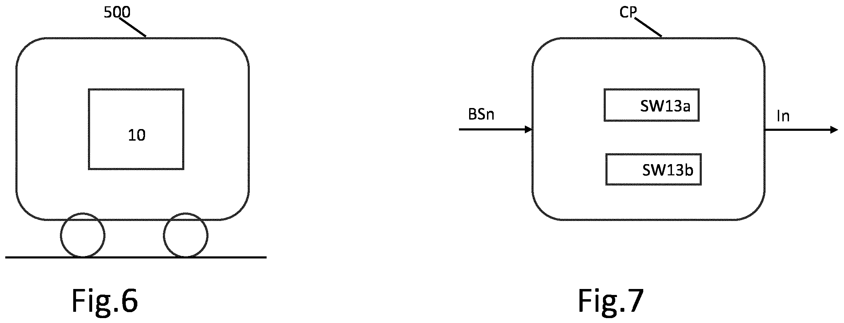

The evaluation unit 13 may be implemented by a computer program, for instance, the computer program CP shown in Figure 7.

In the exemplary embodiment of Figure 1, the evaluation unit 13 comprises an approximation unit 13a and a FFT unit 13b. The FFT unit 13b is configured to carry out a Fast-Fourier-Transformation.

The approximation unit 13a pre-processes the baseband signal BSn in order to facilitate a subsequent Fast-Fourier-Transform. The pre-processing includes a mathematical approximation of the wavefront's shape of the incoming radar radiation IRRn.

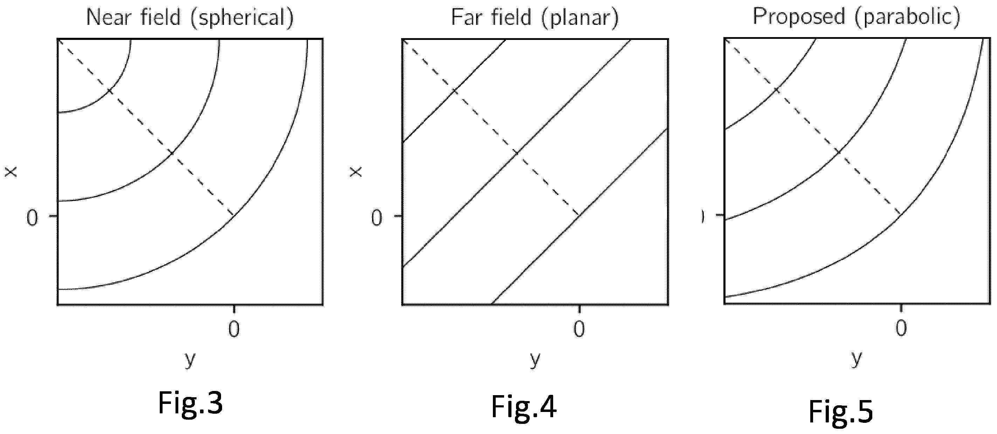

The real wavefront's shape of the incoming radar radiation IRRn is spherical and shown by way of example in Figure 3. The mathematical approximation is based on the assumption of a parabolic shape of the wavefront.

Hereinafter, it is assumed that the baseband signal BSn is equal to, or at least proportional to, a mathematical function X that describes the spherical shape of the wavefront with respect to the frequency-modulated driver signal DS of Figure 2 - before the approximation is carried out - as follows: $X \left(t\right) = {e}^{j 2 π \left(fτ+ατt-\frac{α}{2}{τ}^{2}\right)}$ wherein τ designates the time delay between outgoing emission of radar radiation from the m-th transmit antenna TAm and the later reception of the incoming radar radiation IRRn by the receive antenna RAn. t designates the time of measurement.

In order to approximate the real (spherical) shape using the assumed (parabolic) shape, the approximation unit 13a may replace the mathematical function X with the product of a planar function and a correction function. $X \left(t\right) = {e}^{j 2 π \left(fτ+ατt-\frac{α}{2}{τ}^{2}\right)} \approx TP \left(t\right) ∗ TC \left(t\right)$ wherein TP designates the planar function, and TC designates the correction function.

The planar function TP assumes a planar shape of the wavefront of the incoming radar radiation IRRn. Figure 4 shows the planar shape by way of example.

The correction function TC mathematically bends the planar shape into the parabolic shape. Figure 5 shows the resulting parabolic shape by way of example.

Assuming a prior sampling of the baseband signal BSn for allowing a numerical evaluation, the planar function TP may be calculated as follows $TP \left(l\right) = {e}^{- j 2 π \frac{f}{c} {d}^{T} \left({q}_{m}+{p}_{n}\right)} {e}^{j 4 π \frac{α}{c} {rT}_{s} l}$ wherein Ts designates a sampling rate of the evaluation unit 13, l designates a sampling index, and c designates the speed of light.

The correction function TC is preferably calculated as follows $TC \left(l\right) = TC 1 \left(l\right) ∗ TC 2 \left(l\right)$ where TC1 describes a parabolic correction and TC2 describes a linear correction.

The parabolic correction is preferably calculated as follows $TC 1 \left(l\right) = {e}^{- jπ \frac{f}{rc} \left({\left|{q}_{m}\right|}^{2}+{\left|{p}_{n}\right|}^{2}\right)}$

The linear correction is preferably calculated as follows $TC 2 \left(l\right) = {e}^{j 4 π \frac{α}{c} {d}^{T} \left({q}_{m}+{p}_{n}\right) {T}_{s} l}$

The FFT unit 13b subjects the resulting approximated baseband signal BSAn $\begin{matrix}BSAn \left(l\right) = TP \left(l\right) ∗ TC 1 \left(l\right) ∗ TC 2 \left(l\right) = \\ {e}^{- j 2 π \frac{f}{c} {d}^{T} \left({q}_{m}+{p}_{n}\right)} {e}^{j 4 π \frac{α}{c} {rT}_{s} l} {e}^{- jπ \frac{f}{rc} \left({\left|{q}_{m}\right|}^{2}+{\left|{p}_{n}\right|}^{2}\right)} {e}^{j 4 π \frac{α}{c} {d}^{T} \left({q}_{m}+{p}_{n}\right) {T}_{s} l}\end{matrix}$ to a Fast Fourier Transform, thereby calculating the frequency spectrum Fn(f), which contains or constitutes the sought-after radar information In.

An object detection unit 14 may evaluate the frequency spectrum Fn(f) and derive detection signals that describe the distance or speed of detected objects. The objects can be identified by frequency peaks in the spectrum.

The object detection unit 14 may also evaluate further radar information I0,..In-1,In+1,..IN extracted from the receive signals from the other receive antennas RA0,...RAn-1,RAn+1,...RAN. For instance, the object detection unit 14 may evaluate the phase or frequency shift between the corresponding frequency spectra and calculate angular information regarding the position of the detected object 20 as known in the art. To this end, the central unit CU may comprise an individual mixing unit and an individual evaluation unit for each of the receive antennas.

Fig. 6 depicts an exemplary embodiment of a vehicle 500. The vehicle 500 is equipped with the radar system 10 shown in Figure 1.

Fig. 7 depicts an exemplary embodiment of a computer program CP comprising instructions which, when executed by a computer, cause the computer to carry out the steps of: evaluating a baseband signal BSn generated by a radar system, for instance the radar system described above, and/or generated within a method of operating a radar system, for instance the method described above, thereby extracting radar information In from the baseband signal BSn, wherein the step of evaluating the baseband signal BSn includes a mathematical approximation of the wavefront's shape of the incoming radiation IRRn, and wherein the mathematical approximation of the wavefront's shape includes the assumption of a parabolic shape of the wavefront.

To this end, the computer program CP comprises a first software module SW13a and a second software module SW13b. The first software module SW13a forms, when executed by a computer, the approximation unit 13a discussed above. The second software module SW13b forms, when executed by a computer, the FFT unit 13b discussed above.

The various embodiments and aspects of embodiments of the invention disclosed herein are to be understood not only in the order and context specifically described in this specification, but to include any order and any combination thereof. Whenever the context requires, all words used in the singular number shall be deemed to include the plural and vice versa. Whenever the context requires, all options that are listed with the word **"and"** shall be deemed to include the word **"or"** and vice versa, and any combination thereof.

In the drawings and specification, there have been disclosed a plurality of embodiments of the present invention. The applicant would like to emphasize that each feature of each embodiment may be combined with or added to any other of the embodiments in order to modify the respective embodiment and create additional embodiments. These additional embodiments form a part of the present disclosure and, therefore, the applicant may file further patent claims regarding these additional embodiments at a later stage of the prosecution.

## Claims

1. Radar system (10) comprising at least one transmit antenna (TAm) for emitting radar radiation (ERRm), at least one receive antenna (RAn) for receiving incoming radar radiation (IRRn), a mixing unit (12) and an evaluation unit (13),
- wherein the mixing unit (12) is configured to mix a receive signal provided by the receive antenna (RAn) with a reference signal and generate a baseband signal (BSn),
- wherein the evaluation unit (13) is configured to evaluate the baseband signal (BSn) and extract radar information (In) from the baseband signal (BSn),
- wherein the evaluation of the baseband signal (BSn) includes a mathematical approximation of the wavefront's shape of the incoming radar radiation (IRRn), and
- wherein the mathematical approximation is based on the assumption of a parabolic shape of the wavefront.

2. Radar system (10) of claim 1,
wherein the evaluation of the baseband signal (BSn) includes the steps of calculating a planar shape for the wavefront and bending the planar shape into the parabolic shape.

3. Radar system (10) of claim 2,
wherein the step of bending the planar shape of the wavefront into the parabolic shape is FFT-compatible.

4. Radar system (10) of any of the preceding claims,
wherein the evaluation unit (13) is configured to apply FFT-calculation after the step of bending the planar shape of the wavefront into the parabolic shape.

5. Radar system (10) of any of the preceding claims,
wherein the mathematical approximation includes multiplying a planar function that describes a planar shape of the wavefront, and a correction function.

6. Radar system (10) of claim 5,
wherein the correction function is adapted to bend the planar shape into the parabolic shape.

7. Radar system (10) of any of the preceding claims,
wherein a driver signal (DS) that a driver unit provides to the transmit antenna (TAm), is a linearly frequency-modulated signal (DS).

8. Radar system (10) of any of the preceding claims,
wherein the baseband signal (BSn) is considered equal to, or at least proportional to, a mathematical function X being defined as $X \left(t\right) = {e}^{j 2 π \left(fτ+ατt-\frac{α}{2}{τ}^{2}\right)}$
wherein
fm designates a carrier frequency of the driver signal,
α designates the slope of the carrier frequency,
τ designates the time delay between emission of the radar radiation by the transmit antenna and reception of the incoming radar radiation by the receive antenna, and
t designates the time of measurement.

9. Radar system (10) of claim 8,
wherein the mathematical approximation includes replacing the mathematical function X with a product of a planar function and a correction function: $X \left(t\right) = {e}^{j 2 π \left(fτ+ατt-\frac{α}{2}{τ}^{2}\right)} \approx TP \left(t\right) ∗ TC \left(t\right)$
wherein TP designates the planar function, and TC designates the correction function.

10. Radar system (10) of any of the preceding claims, wherein the correction function TC is calculated as follows $TC = TC 1 ∗ TC 2$

11. Radar system (10) of any of the preceding claims, wherein TC1 and TC2 are calculated as follows $TC 1 \left(l\right) = {e}^{- jπ \frac{f}{rc} \left({\left|{q}_{m}\right|}^{2}+{\left|{p}_{n}\right|}^{2}\right)}$ $TC 2 \left(l\right) = {e}^{j 4 π \frac{α}{c} {d}^{T} \left({q}_{m}+{p}_{n}\right) {T}_{s} l}$ wherein
qm designates a position vector defining the position of the m-th transmit antenna with respect to a given coordinate system,
pn designates a position vector defining the position of the n-th receive antenna with respect to the given coordinate system,
r designates the distance of a detected object from the origin of the given coordinate system,
Ts designates a sampling rate of the evaluation unit,
l designates a sampling index,
d designates a direction vector, and
c designates the speed of light.

12. Radar system (10) of any of the preceding claims, wherein the planar function TP is calculated as follows $TP \left(l\right) = {e}^{- j 2 π \frac{f}{c} {d}^{T} \left({q}_{m}+{p}_{n}\right)} {e}^{j 4 π \frac{α}{c} {rT}_{s} l}$

13. Vehicle comprising a radar system (10),
wherein the radar system (10) is a radar system (10) of any of the preceding claims.

14. Method of operating a radar system (10), for instance a radar system (10) of any of the preceding claims, including the steps of**:**
- emitting radar radiation (ERRm),
- receiving incoming radar radiation (IRRn) and generating a receive signal,
- mixing the receive signal with a reference signal and generating a baseband signal (BSn), and
- evaluating the baseband signal (BSn), thereby extracting radar information (In) from the baseband signal (BSn),
- wherein the step of evaluating the baseband signal (BSn) includes a mathematical approximation of the wavefront's shape of the incoming radiation, and
- wherein the mathematical approximation of the wavefront's shape includes the assumption of a parabolic shape of the wavefront.

15. Computer program (CP) comprising instructions which, when executed by a computer, cause the computer to carry out the steps of
- evaluating a baseband signal (BSn) generated by a radar system (10), for instance a radar system (10) of any of the preceding claims 1-13, and/or generated within a method of operating a radar system (10), for instance the method of claim 14, thereby extracting radar information (In) from the baseband signal (BSn),
- wherein the step of evaluating the baseband signal (BSn) includes a mathematical approximation of the wavefront's shape of the incoming radiation, and
- wherein the mathematical approximation of the wavefront's shape includes the assumption of a parabolic shape of the wavefront.
